(19) Europäisches Patentamt
European Patent Office
Office européen des brevets

(11) Publication number: 0 008 474
B1

(12) **EUROPEAN PATENT SPECIFICATION**

(45) Date of publication of patent specification: **02.10.85**

(21) Application number: **79200442.6**

(22) Date of filing: **10.08.79**

(51) Int. Cl.[4]: **A 01 N 53/00,** A 01 N 47/24 // (A01N53/00, 47:24),(A01N47/24, 37:38)

(54) **Pesticidal compositions containing a carbamic acid-N,N'-sulphide, combined with a synthetic pyrethroid insecticide and their use.**

(30) Priority: **24.08.78 GB 3451078**

(43) Date of publication of application:
**05.03.80 Bulletin 80/05**

(45) Publication of the grant of the patent:
**02.10.85 Bulletin 85/40**

(84) Designated Contracting States:
**BE CH DE FR GB IT LU NL**

(56) References cited:
**FR-A-2 277 818**
**NL-A-7 801 368**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Badmin, John Stewart**
**26, Arundel Avenue**
**Sittingbourne, Kent (GB)**

(74) Representative: **Hunter, Keith Roger Ian et al**
**4 York Road**
**London SE1 7NA (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 008 474 B1

**Description**

This invention relates to pesticidal compositions, their preparation and their use.

A class of synthetic insecticides commonly referred to in the art as "pyrethroid insecticides" is known and various examples of synthetic pyrethroid insecticides are described together with their preparation, in UK Patent Specification No. 1,413,491 and US Patent Nos. 3,835,178 and 3,996,244.

Netherlands published Patent Application No. 7801368 discloses pesticidal compositions containing as active ingredients S-methyl N-(methylcarbamoyloxy)thioacetamidate ("methomyl") and a pyrethroid insecticide.

French Patent Application Publication No. 2,277,818 and UK Patent Specification No. 1,486,969 describe bis-[O-(1-methylthioethylimino)-N-methylcarbamic acid]-N,N'-sulphide ("bis-methomylthioether"), together with its use as an insecticide. It is also disclosed that the insecticidal activity spectrum may be broadened by addition of other insecticides including pyrethrin-like derivatives.

It has now surprisingly been discovered that mixtures of bis-[(O-1-methylthio-ethylimino)-N-methyl carbamic acid]-N,N'-sulphide and certain synthetic pyrethroid insecticides exhibit synergistic pesticidal activity against aphids such as *Aphis fabae*, the black bean aphid.

The invention provides a pesticidal composition which comprises:—

(a) the compound of formula

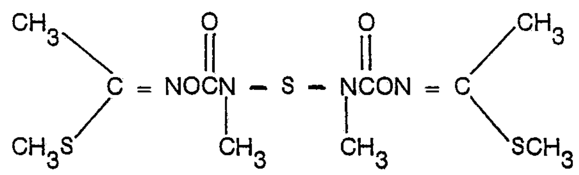

(I)

bis-[(O-1-methylthio-ethylimino)-N-methyl carbamic acid]-N,N'-sulphide, hereinafter referred to as bis-methomylthioether; and

(b) a synthetic pyrethroid insecticide having the following general formula:—

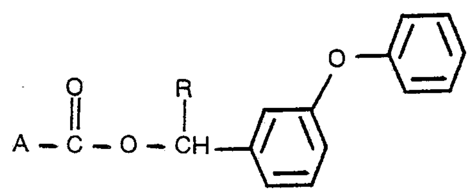

(II)

wherein R is hydrogen, cyano or ethynyl, and A represents a cyclopropyl group of general formula:—

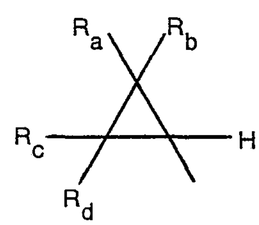

(III)

wherein $R_a$ and $R_b$ both represent a methyl group or a chlorine atom, or $R_a$ and $R_b$ together represent an alkylene group containing 3 carbon atoms, or $R_a$ represents a hydrogen atom and $R_b$ represents an isobutenyl group or a monochlorovinyl, monobromovinyl, dichlorovinyl or dibromovinyl group; and $R_c$ and $R_d$ both represent methyl groups or $R_c$ and $R_d$ together represent an alkylene group containing 3 carbon atoms.

It should be understood that the compound of the general formula II may be present in the form of any one of its optical or geometric, for example cis-trans, isomers, or in the form of a mixture of isomers, for example a racemate. A mixture of two or more compounds according to the general formula II may be present. The bis-methomyl thioether may also be present in the form of one of its geometric isomers or a mixture thereof.

The most preferred synthetic pyrethroid insecticides for use in the pesticidal composition according to the invention have the general formula II wherein A is 2,2,3,3-tetramethylcyclopropyl, 2-(2,2-dichlorovinyl)-3,3-dimethylcyclopropyl, or 2-(2,2-dibromovinyl)-3,3-dimethylcyclopropyl and R is cyano. Especially preferred is the compound known as cypermethrin whose formula is given in the Example herein.

The weight ratio of the pyrethroid insecticide to bis-methomyl thioether is preferably in the range 5:1 to 1:50, more preferably in the range 1:1 to 1:25.

The mixture of bis-methomyl thioether and the synthetic pyrethroid insecticide produces a surprising synergistic effect, for example with respect to aphids, for example *Aphis fabae*, the black bean aphid. The invention therefore also provides a method of combating pests at a locus which comprises applying to that locus a pesticidal composition according to the invention.

The pesticidal composition according to the invention preferably also comprises a carrier, especially at least two carriers, at least one of which is a surface-active agent.

The invention also provides a process for preparing a pesticidal composition which comprises bringing a compound of formula I and a pyrethroid insecticide of formula II into association with at least one carrier therefor.

A carrier in a composition according to the invention is any material with which the active ingredient is formulated to facilitate application to the locus to be treated, which may for example be a plant, seed or soil, or to facilitate storage, transport or handling. A carrier may be a solid or a liquid, including a material which is normally gaseous but which has been compressed to form a liquid, and any of the carriers normally used in formulating pesticidal compositions may be used.

Suitable solid carriers include natural and synthetic clays and silicates, for example natural silicas such as diatomaceous earths; magnesium silicates, for example talcs; magnesium aluminium silicates, for example attapulgites and vermiculites; aluminium silicates, for example kaolinites, montmorillonites and micas; calcium carbonate; calcium sulphate; synthetic hydrated silicon oxides and synthetic calcium or aluminium silicates; elements, for example carbon and sulphur; natural and synthetic resins, for example coumarone resins, polyvinyl chloride, and styrene polymers and copolymers; solid polychlorophenols; bitumen; waxes, for example beeswax, paraffin wax, and chlorinated mineral waxes; and solid fertilisers, for example superphosphates.

Suitable liquid carriers include water; alcohols, for example isopropanol and glycols; ketones, for example acetone, methyl ethyl ketone, methyl isobutyl ketone and cyclohexanone; ethers; aromatic or araliphatic hydrocarbons, for example benzene, toluene and xylene; petroleum fractions, for example kerosine and light mineral oils; chlorinated hydrocarbons, for example carbon tetrachloride, perchloroethylene and trichloroethane. Mixtures of different liquids are often suitable.

Pesticidal compositions are often formulated and transported in a concentrated form which is subsequently diluted by the user before application. The presence of small amounts of a carrier which is a surface-active agent facilitates this process of dilution.

A surface-active agent may be an emulsifying agent, a dispersing agent or a wetting agent; it may be nonionic or ionic. Examples of suitable surface-active agents include the sodium or calcium salts of polyacrylic acids and lignin sulphonic acids; the condensation products of fatty acids or aliphatic amines or amides containing at least 12 carbon atoms in the molecule with ethylene oxide and/or propylene oxide; fatty acid esters of glycerol, sorbitan, sucrose or pentaerythritol; condensates of these with ethylene oxide and/or propylene oxide; condensation products of fatty alcohol or alkyl phenols, for example *p*-octylphenol or *p*-octylcresol, with ethylene oxide and/or propylene oxide; sulphates or sulphonates of these condensation products; alkali or alkaline earth metal salts, preferably sodium salts, of sulphuric or sulphonic acid esters containing at least 10 carbon atoms in the molecule, for example sodium lauryl sulphate, sodium secondary alkyl sulphates, sodium salts of sulphonated castor oil, and sodium alkylaryl sulphonates such as sodium dodecylbenzene sulphonate; and polymers of ethylene oxide and copolymers of ethylene oxide and propylene oxide.

The compositions of the invention may for example be formulated as wettable powders, dusts, granules, solutions, emulsifiable concentrates, emulsions, suspension concentrates and aerosols. Wettable powders usually contain 25, 50 and 75% w of active ingredient and usually contain, in addition to solid inert carrier, 3—10% w of a dispersing agent and, where necessary, 0—10% w of stabiliser(s) and/or other additives such as penetrants or stickers. Dusts are usually formulated as a dust concentrate having a similar composition to that of a wettable powder but without a dispersant, and are diluted in the field with further solid carrier to give a composition usually containing ½—10% w of active ingredient. Granules are usually prepared to have a size between 10 and 100BS mesh (1.676—0.152 mm), and may be manufactured by agglomeration or impregnation techniques. Generally, granules will contain ½—25% w active ingredient and 0—10% w of additives such as stabilisers, slow release modifiers and binding agents. Emulsifiable concentrates usually contain, in addition to a solvent and, when necessary, co-solvent, 10—50% w/v active ingredient, 2—20% w/v emulsifiers and 0—20% w/v of other additives such as stabilisers, penetrants and corrosion inhibitors. Suspension concentrates are usually compounded so as to obtain a stable, non-sedimenting flowable product and usually contain 10—75% w active ingredient, 0.5—15% w of dispersing agents, 0.1—10% w of suspending agents such as protective colloids and thixotropic agents, 0—10% w of other additives such as defoamers, corrosion inhibitors, stabilisers, penetrants and stickers, and water or an organic liquid in which the active ingredient is substantially insoluble; certain organic solids or inorganic salts may be present dissolved in the formulation to assist in preventing sedimentation or as antifreeze agents for water.

Aqueous dispersions and emulsions, for example compositions obtained by diluting a wettable powder or a concentrate according to the invention with water, also lie within the scope of the present invention. The said emulsions may be of the water-in-oil or of the oil-in-water type, and may have a thick 'mayonnaise'-like consistency.

The compositions of the invention may also contain other ingredients, for example, other compounds possessing pesticidal, herbicidal or fungicidal properties.

The following Example illustrates the invention.

## Example

*Activity of Pyrethroid/Bis-methomyl thioether mixtures against Aphis fabae* (black bean aphid)

The activities against *Aphis fabae* of bis-methomyl thioether, the synthetic pyrethroid insecticide of formula

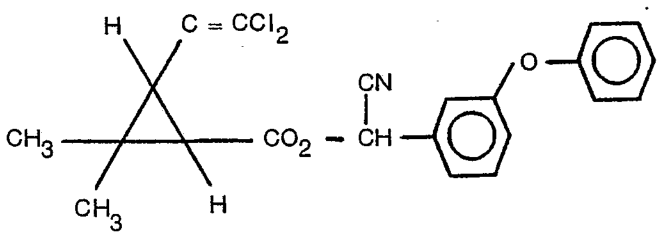

(V)

known as cypermethrin, and mixtures thereof, were assessed by the following method.

Test solutions or suspensions were made up of water containing 0.4% by weight active ingredient, 20% by weight acetone and 0.5% by weight Triton X-100 (Trade Mark). These solutions or suspensions were subsequently diluted to produce compositions containing various concentrations of active ingredient.

Pairs of leaves were removed from broad-bean plants and placed ventral side uppermost on filter paper inside petri dishes. The leaves were sprayed with the test solution using a logarithmic spraying machine and a dosage equivalent to 400 litres/hectare, and allowed to dry for $\frac{1}{2}$—1 hour. Each leaf pair was infested with 10 aphids. Temperature was held constant at 23°C ± 2°C, and humidity and light fluctuated. The number of dead and moribund insects was counted after 24 hours. From the results, the $LC_{50}$ (the lethal dosage in percentage by weight required to kill 50% of the test insects) was calculated.

Toxicity indices were then calculated using the following formula:

$$\text{Toxicity Index} = \frac{LC_{50} \text{ of standard}}{LC_{50} \text{ of compound or mixture}} \times 100$$

The standard used was ethyl parathion.

The joint action of the two active components of a mixture was analysed by the method of Yun-Pei Sun and E. R. Johnson, Journal of Economic Entomology, 1960, Vol. 53 no. 5, pp. 887—892. A coefficient of co-toxicity of a mixture is given by:—

$$\begin{array}{c}\text{coefficient of} \\ \text{co-toxicity of mixture}\end{array} = \frac{\text{actual toxicity index of mixture}}{\text{theoretical toxicity index of mixture}} \times 100$$

The theoretical toxicity index of a mixture is equal to the sum over both components of the percentage of each individual compound present in the mixture multiplied by its respective toxicity index.

A coefficient of co-toxicity of a mixture near 100 indicates the probability of similar action by the two compounds; independent action usually gives a coefficient less than 100; and a coefficient significantly above 100 strongly indicates synergism.

The results obtained are illustrated in the following Table.

| Test compounds | $LC_{50}$ | Coefficient of co-toxicity |
|---|---|---|
| bis-methomyl thioether | 0.0044 | |
| cypermethrin | 0.00031 | |
| bis-methomyl thioether/cypermethrin 5:1 mixture | 0.00096 | 140 |

The coefficient of co-toxicity of 140 indicates synergism in the mixture tested.

**Claims**

1. A pesticidal composition characterised in that the active ingredient comprises a combination of (a) the compound of formula

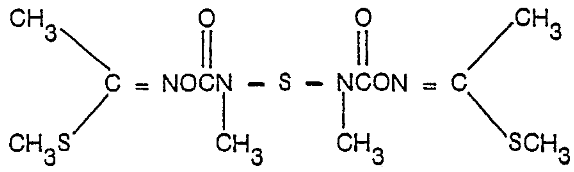

(I)

(b) a synthetic pyrethroid insecticide having the general formula

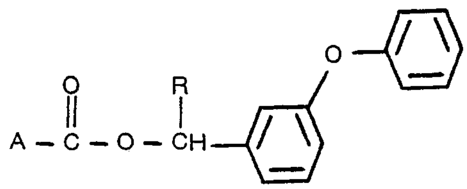

(II)

wherein R is hydrogen, cyano or ethynyl and A represents a cyclopropyl group of formula

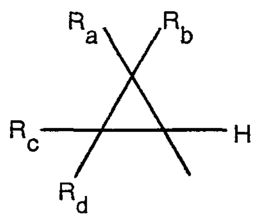

(III)

wherein $R_a$ and $R_b$ both represent a methyl group or a chlorine atom, or $R_a$ and $R_b$ together represent an alkylene group containing 3 carbon atoms, or $R_a$ represents a hydrogen atom and $R_b$ represents a isobutenyl group or a monochlorovinyl, monobromovinyl, dichlorovinyl or dibromovinyl group, and $R_c$ and $R_d$ both represent methyl groups or $R_c$ and $R_d$ together represent an alkylene group containing 3 carbon atoms.

2. A composition according to Claim 1 wherein in the compound of formula II A is 2,2,3,3-tetramethylcyclopropyl, 2-(2,2-dichlorovinyl)-3,3-dimethylcyclopropyl, or 2-(2,2-dibromovinyl)-3,3-dimethylcyclopropyl and R is cyano.

3. A composition according to Claim 2 wherein the compound of formula II has the formula

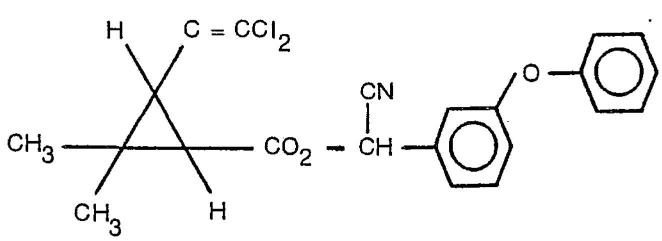

(V)

4. A composition according to any one of Claims 1 to 3 wherein the pyrethroid insecticide and the compound of formula I are present in the composition in relative amounts by weight in the range 5:1 to 1:50.

5. A composition according to Claim 4 wherein the relative amounts by weight are in the range 1:1 to 1:25.

6. A method of combating pests at a locus characterised by applying to the locus a pesticidal composition according to any one of Claims 1 to 5.

**Patentansprüche**

1. Eine Pestizid-Zusammensetzung, dadurch gekennzeichnet, daß der Wirkstoff eine Kombination aus a) einer Verbindung der Formel I:

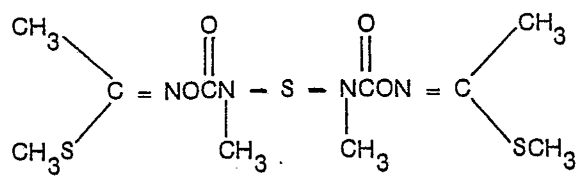
(I)

und

b) eines synthetischen Pyrethroid-Insektizids der allgemeinen Formel II

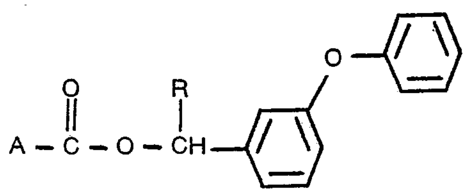
(II)

in welcher R Wasserstoff, Cyano oder Äthinyl ist und A eine Cyclopropylgruppe der Formel III

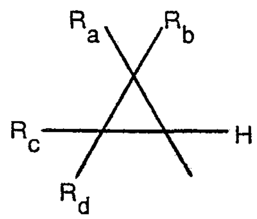
(III)

darstellt, in welcher $R_a$ und $R_b$ je eine Methylgruppe oder ein Chloratom bedeuten, oder $R_a$ und $R_b$ zusammen eine Alkylengruppe mit 3 Kohlenstoffatomen bedeuten, oder $R_a$ ein Wasserstoffatom und $R_b$ eine Isobutenyl- oder Monochlorvinylgruppe, eine Monobromvinyl-, Dichlorvinyl- oder Dibromvinylgruppe darstellt, und $R_c$ und $R_d$ je eine Methylgruppe sind oder $R_c$ und $R_d$ zusammen eine Alkylengruppe mit 3 Kohlenstoffatomen bedeuten, enthält.

2. Eine Zusammensetzung nach Anspruch 1, in welcher in der Verbindung der Formel II A 2,2,3,3-Tetramethylcyclopropyl, 2-(2,2-Dichlorvinyl)-3,3-dimethylcyclopropyl oder 2-(2,2-Dibromvinyl)-3,3-dimethylcyclopropyl ist und R Cyano bedeutet.

3. Eine Zusammensetzung nach Anspruch 2, in welcher die Verbindung der Formel II die Formel

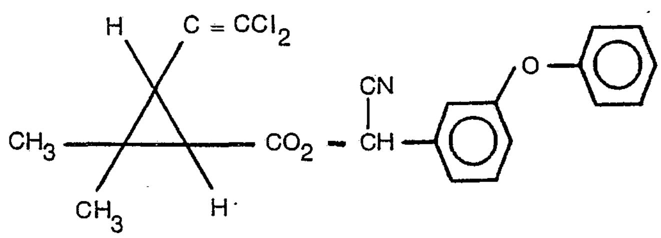
(V)

hat.

4. Eine Zusammensetzung nach irgendeinem der Ansprüche 1 bis 3, wobei das Pyrethroid-Insektizid und die Verbindung der Formel I in einem Gewichtsverhältnis im Bereich von 5:1 bis 1:50 in der Zusammensetzung vorliegen.

5. Eine Zusammensetzung nach Anspruch 4, in welcher das Gewichtsverhältnis im Bereich von 1:1 bis 1:25 liegt.

6. Ein Verfahren zur lokalen Schädlingsbekämpfung, dadurch gekennzeichnet, daß eine Pestizid-Zusammensetzung nach irgendeinem der Ansprüche 1 bis 5 lokal angewendet wird.

**Revendications**

1. Une composition pesticide, caractérisée en ce que l'ingredient actif comprend une combinaison de (a) le composé de formule

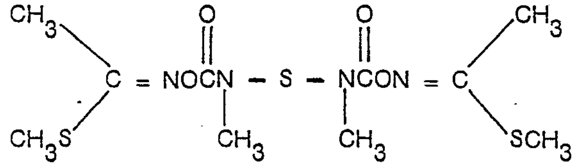
(I)

(b) un insecticide pyréthroïde synthétique ayant la formule générale

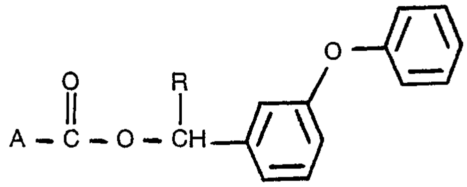

(II)

où R est de l'hydrogène ou un groupe cyano ou éthynyle et A représente un groupe cyclopropyle de formule

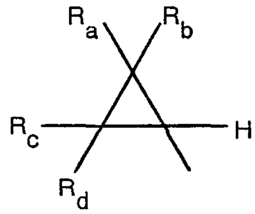

(III)

où $R_a$ et $R_b$ représentent tous deux un groupe méthyle ou un atome de chlore, ou $R_a$ et $R_b$ représentent ensemble un groupe alcoylène contenant 3 atomes de carbone, ou $R_a$ représente un atome d'hydrogène et $R_b$ représente un groupe isobuténylе ou un groupe monochlorovinyle, monobromovinyle, dichlorovinyle ou dibromovinyle et $R_c$ et $R_d$ représentent tous deux des groupes méthyle ou $R_c$ et $R_d$ représentent ensemble un groupe alcoylène contenant 3 atomes de carbone.

2. Une composition selon la revendication 1, dans laquelle dans le composé de formule II, A est un groupe 2,2,3,3-tétraméthylcyclopropyle, 2-(2,2-dichlorovinyl)-3,3-diméthylcyclopropyle ou 2-(2,2-dibromovinyl)-3,3-diméthylcyclopropyle) et R est un groupe cyano.

3. Une composition selon la revendication 2, dans laquelle le composé de formule II a la formule

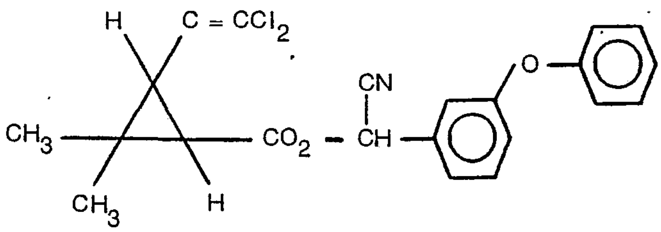

(V)

4. Une composition selon l'une quelconque des revendications 1 à 3, dans laquelle l'insecticide pyréthroïde et le composé de formule I sont présents dans la composition dans des quantités relatives en poids comprises entre 5:1 et 1:50.

5. Une composition selon la revendication 4, dans laquelle les quantités relatives en poids sont comprises entre 1:1 et 1:25.

6. Un procédé de lutte contre des organismes nuisibles en un lieu, caractérisé par l'application à ce lieu d'une composition pesticide selon l'une quelconque des revendications 1 à 5.